(19) Europäisches Patentamt
European Patent Office
Office européen des brevets

(11) EP 2 696 988 B1

(12) **EUROPÄISCHE PATENTSCHRIFT**

(45) Veröffentlichungstag und Bekanntmachung des Hinweises auf die Patenterteilung:
**08.07.2020 Patentblatt 2020/28**

(21) Anmeldenummer: **12709597.4**

(22) Anmeldetag: **13.03.2012**

(51) Int Cl.:
**B05B 7/14** *(2006.01)*  **B05B 12/08** *(2006.01)*
**B65G 53/24** *(2006.01)*

(86) Internationale Anmeldenummer:
**PCT/EP2012/054340**

(87) Internationale Veröffentlichungsnummer:
**WO 2012/139840 (18.10.2012 Gazette 2012/42)**

(54) **VORRICHTUNG UND VERFAHREN ZUM FÖRDERN VON PULVERN AUS EINEM PULVERVORRAT**

DEVICE AND METHOD FOR CONVEYING POWDER FROM A POWDER SUPPLY

DISPOSITIF ET PROCÉDÉ DE TRANSPORT DE POUDRE DEPUIS UNE RÉSERVE DE POUDRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.04.2011 DE 102011017277**
**05.08.2011 DE 102011052431**

(43) Veröffentlichungstag der Anmeldung:
**19.02.2014 Patentblatt 2014/08**

(73) Patentinhaber: **Maschinenfabrik Reinhausen GmbH**
**93059 Regensburg (DE)**

(72) Erfinder: **NETTESHEIM, Stefan**
**93051 Regensburg (DE)**

(74) Vertreter: **Reichert & Lindner**
**Partnerschaft Patentanwälte**
**Stromerstr. 2A**
**93049 Regensburg (DE)**

(56) Entgegenhaltungen:
**DE-A1-102004 024 447 DE-C1- 4 112 268**
**JP-A- 2001 130 743 JP-U- H0 456 130**
**US-A1- 2009 001 198**

**Beschreibung**

Die Erfindung betrifft eine Vorrichtung zum Fördern von Pulver. Im Besonderen umfasst die Vorrichtung einen Behälter für das Pulver, wobei das Pulver im Behälter eine Oberfläche definiert. Ein Ansaugmittel, das mit einer Ansaugöffnung versehen ist, dient zum Ansaugen des Pulvers von der Oberfläche.

Ferner betrifft die Erfindung ein Verfahren zum Fördern von Pulver aus einem Behälter für das Pulver.

Derartige Vorrichtungen und Verfahren kommen beispielsweise zur Zuführung dosierter Mengen von feinkörnigen Pulvern für Plasma-Beschichtungsprozesse zum Einsatz. Pulverablagerungen und Agglomerationen des Pulvers müssen vermieden werden, da andernfalls die Förderung des Pulvers zum Erliegen kommen kann.

Die Förderung feiner Pulver mit Korngrößen von weniger als 150 μm ist mit bekannten Fördervorrichtungen nur unter erheblicher Einschränkung der Genauigkeit des geförderten Massenstroms möglich. Bei Partikeln unterhalb von 20μm und Förderraten von weniger al 10 g/min gibt es keine technisch ideale Lösung. Unterhalb dieser Korngröße nehmen die Adhäsionskräfte zwischen den Pulverpartikeln erheblich zu. Die Oberfläche der Partikel vergrößert sich im Verhältnis zum Volumen erheblich. Ein Würfel mit einer Kantenlänge von 1 cm weist eine Oberfläche von 0,006 m$^2$ auf. Das gleiche Volumen mit Partikeln von fünf Nanometern Kantenlänge aufgefüllt, weist indes eine Oberfläche von 2.400 m$^2$ auf. Die starke Zunahme der Oberflächenkräfte behindert die Förderung derart kleiner Partikel. Durch permanente Energieeinkopplung, insbesondere hohe Strömungsgeschwindigkeiten, die mit einem hohen Gas- bzw. Luftverbrauch einhergehen, kann ein Agglomerieren des Pulver-/ Gasgemisches vermieden werden. Hohe Gasvolumenströme sind jedoch in verschiedenen nachgeschalteten Arbeitsprozessen, wie beispielsweise bei Plasma-Beschichtungsprozessen oder Laser-Beschichtungsprozessen, nachteilig. Darüber hinaus bedingen hohe Gasvolumenströme einen höheren Energieeinsatz für die Förderung. Des Weiteren können kleine Mengen feinkörniger Pulver nicht mit Gas dispergiert werden.

Die DE 44 23 197 offenbart eine Pulverpumpe für Pulver zum Sprühbeschichten von Gegenständen in einer stabartig länglichen Form. An einer Stirnseite weist die Pulverpumpe eine Pulveransaugöffnung auf, über die Pulver aus einem nach oben offenen Pulverbehälter angesaugt und durch ein inneres Rohr der Pulverpumpe zu einem Verbraucher befördert wird. Die Förderung selbst erfolgt durch Erzeugung eines Vakuums in der Pulverpumpe. Das Vakuum wird mit einer Injektordüse erzeugt, die sich in der Nähe der Pulveransaugöffnung befindet.

Die DE 10 2006 002 582 A1 offenbart einen Pulverförderer mit einer Fluidisiereinheit. Die Fluidisiereinheit ist am Ende eines Pulveransaugrohrs des Pulverförderers angeordnet und bläst im Ansaugbereich des Pulveransaugrohrs Fluidisierluft in den Pulvervorrat, so dass das Pulver fluidisiert und dadurch einfacher angesaugt und transportiert werden kann. Die Fluidisiereinheit ist oberhalb und konzentrisch zur Pulveransaugöffnung angeordnet. Hierdurch bildet sich ein schirmförmiger fluidisierter Pulverbereich um die Ansaugöffnung herum aus. Die Förderung erfolgt mittels eines mit Druckluft arbeitenden Injektors, der an dem der Fluidisiereinheit gegenüberliegendem Ende des Pulveransaugrohres angeschlossen ist. Eine Fluidisierung direkt unterhalb der Pulveransaugöffnung erfolgt konstruktionsbedingt nicht. Obwohl die ringförmige Fluidisierung das Ansaugen des Pulvers verbessert, ist die Konstanz der Pulvermenge beim Ansaugen nicht optimal. Des Weiteren werden Agglomerate des Pulvers nur unzureichend aufgelöst und größtenteils unmittelbar durch die Pulveransaugöffnung abgesaugt. Dies führt insbesondere bei nachgeschalteten Beschichtungsprozessen, die eine gleich bleibende Schichtdicke erfordern, zu Problemen. Weitere zum Stand der Technik gehörende Pulverpumpen sind in DE 41 12 268 C1 und JP 2001 13043 A gezeigt.

Ausgehend von diesem Stand der Technik liegt der Erfindung die Aufgabe zu Grunde, eine Vorrichtung für das Fördern von Pulvern zu schaffen, so dass die Menge des geförderten Pulvers über die Zeit konstant ist.

Diese Aufgabe wird durch eine Vorrichtung mit den Merkmalen des Anspruchs 1 gelöst.

Eine weitere Aufgabe der Erfindung ist ein Verfahren für das Fördern von Pulvern zu schaffen, so dass die Menge des geförderten Pulvers über die Zeit einem vorgegebenen Wert entspricht.

Diese Aufgabe wird durch ein Verfahren gelöst, das die Merkmale des Anspruchs 11 gelöst.

Erfindungsgemäß ist die Position des Ansaugmittels in Z-Koordinatenrichtung derart eingestellt, dass das Ansaugen des Pulvers von einem Oberflächenbereich des Pulvers aus dem Behälter erfolgt. So kann das Ansaugen des Pulvers ausschließlich von einer Oberfläche des im Behälter enthaltenen Pulvers erfolgen. Ebenso kann das Ansaugen dabei auch von oder aus einer die Pulveroberfläche enthaltenden Deckschicht des Pulvers erfolgen. Insbesondere bei einem Pulvervorrat aus feinkörnigen, nicht fließfähigen Pulvern entstehen beim Ansaugen aus der unteren Pulverschicht Kavitäten, die nur durch intensives Einwirken auf den umgebenden Pulvervorrat zu beseitigen sind. Die Kavitäten machen sich durch einen ungleichmäßigen Förderstrom (Massenstrom) bei der Förderung des Pulvers bemerkbar. Bewegungsmittel erzeugen eine Relativbewegung zwischen der Ansaugöffnung des Ansaugmittels und der Oberfläche des Pulvers oder der Deckschicht während des Ansaugens des Pulvers. Hierdurch wird die erforderliche mechanische Energie in das Pulver eingekoppelt, um die Ausbildung von Kavitäten in der Deckschicht zu verhindern. Ein Bewegungsmittel dient zur Erzeugung einer Relativbewegung zwischen der Ansaugöffnung und der Oberfläche des Pulvers während des Ansaugens des Pulvers. Eine Geschwindigkeit der Relativbewegung ist derart veränderlich, dass ein vorgegebener Massenstrom von einem ersten Arbeitsraum zu einem zweiten Arbeitsraum vorherrscht, um so das Pulver im Behälter zu dem Substrat zu transportieren.

Die Art und Weise des Ansaugens des Pulvers hängt von der Masse und Größe der einzelnen Pulverpartikel ab. Gemäß einer Ausführung kann das Ansaugmittel von der Oberfläche des Pulvers beabstandet sein. Ferner ist es möglich, dass das Ansaugmittel die Oberfläche des Pulvers berührt. Ebenso, wie bereits oben beschrieben, taucht das Ansaugmittel in die Deckschicht des Pulvers ein. Das Ansaugen in der Deckschicht erfolgt vorzugsweise möglichst nah an der Oberfläche des Pulvers mit einem Abstand der Ansaugöffnung des Ansaugmittels zur Oberfläche des Pulvervorrats in einem Bereich von 1 bis 10 mm. Diese oberflächennahe Ansaugung stellt auch bei feinkörnigen Pulvern mit Partikelgrößen von 0,01 - 100 μm stets sicher, dass die von dem Ansaugmittel in der Deckschicht erzeugte Spur zur Pulveroberfläche offen ist bzw. bleibt.

Wie bereits erwähnt, ist es denkbar, dass das Ansaugmittel (Pulverrüssel oder Saugnadel) ohne Abstand (in Z-Koordinatenrichtung)zur Oberfläche des Pulvers geführt wird. Bei sehr leichtem Pulver kann das Ansaugmittel auch ohne direkten Kontakt zur Pulveroberfläche geführt werden. Dies bedeutet, dass das Ansaugmittel in diesem Fall mit ca. 0, 2 mm von der Pulveroberfläche beabstandet ist und mit diesem Abstand (in Z-Koordinatenrichtung) zur Pulveroberfläche geführt wird. Es besteht somit zwischen dem Ansaugmittel und der Pulveroberfläche kein direkter mechanischer Kontakt. Durch die Saugströmung wird das Pulver aus der Pulveroberfläche gerissen und in das Ansaugmittel überführt.

Der Volumenstrom des geförderten Pulvers lässt sich verändern, wenn die Geschwindigkeit der Relativbewegung zwischen der Ansaugöffnung und dem Pulvervorrat einstellbar ist. Des Weiteren hat die Geometrie des Ansaugmittels sowie der Durchmesser der Ansaugöffnung einen wesentlichen Einfluss auf den Volumenstrom des geförderten Pulvers. Von den vorgenannten Parametern hängt auch der bevorzugte Abstand der Ansaugöffnung des Ansaugmittels zur Oberfläche des Pulvervorrats ab. Größere Volumenströme erlauben einen größeren Abstand der Ansaugöffnung und damit das Ansaugen und Abtragen einer dickeren Pulverschicht während der Relativbewegung des Ansaugmittels in der Deckschicht.

Als Bewegungsmittel zur Erzeugung der Relativbewegung kommen insbesondere Drei-Achssysteme, die eine Bewegung des Ansaugmittels in X-, Y- und Z-Richtung erlauben, in Betracht. Die X-/Y-Bewegung ist zur Erzeugung der horizontalen Relativbewegung zwischen der Ansaugöffnung und der Oberfläche des Pulvers oder des Pulvers innerhalb der Deckschicht erforderlich, während die Z-Achse der vertikalen Nachführung der Ansaugöffnung dient, um einen konstanten Abstand zur Oberfläche des Pulvers, eine ständige Berührung der Oberfläche des Pulvers oder eine konstante Eintauchtiefe des Ansaugmittels in die Deckschicht zu gewährleisten. Die Nachführung der Ansaugöffnung ist erforderlich wenn eine ganze Schicht des Pulvers mit dem Ansaugmittel abgetragen worden ist.

Das Ansaugmittel weist vorzugsweise einen nadelförmigen, hohlzylindrischen Körper mit zwei Stirnseiten auf, wobei eine der Stirnseiten die Ansaugöffnung bildet, während die andere Stirnseite vorzugsweise über eine flexible Saugleitung an die Saugseite einer Pumpe angeschlossen ist, deren Druckseite das Pulver einem nachgeordneten Prozess, insbesondere einem Plasma-Beschichtungsprozess, zuführt.

Eine Möglichkeit zur automatisierten Nachführung der Ansaugöffnung in Richtung der Z-Achse des Pulvervorrats besteht darin, dass an dem Ansaugmittel in einem Abstand zu der Ansaugöffnung ein Auftriebskörper angeordnet ist. Der Auftriebskörper ist so beschaffen, dass er auf der Oberfläche des Pulvervorrates schwimmt und sich daher der Oberfläche des Pulvervorrats anpasst. Der Schwimmer gewährleistet einen konstanten Abstand der Ansaugöffnung zu der Pulveroberfläche innerhalb der Deckschicht.

Die Einstellung einer Druckdifferenz zwischen dem ersten Arbeitsraum und dem zweiten Arbeitsraum dient zur Förderung des Pulvers von der Oberfläche des Pulvers im Behälter zu einer Oberfläche eines Substrats. Eine Möglichkeit zur Einstellung der Druckdifferenz ist eine Membranpumpe.

Das zu fördernde Pulver ist bei einer derartigen Pumpe durch die Membran von dem Antrieb getrennt. Durch diese Trennmembran wird der Antrieb vor den schädlichen Einflüssen des insbesondere feinkörnigen Pulvers geschützt. Des Weiteren wird das feinkörnige Pulver vor etwaigen Einflüssen durch den Antrieb, wie insbesondere Schmierstoffen, getrennt. Die Auslenkung der Membran erfolgt vorzugsweise pneumatisch oder mechanisch. Die Oszillationsfrequenz der Membran liegt für das Fördern feiner Pulver vorzugsweise in einem Frequenzbereich von 10 Hz bis 200 Hz bei einem Pumpenvolumen in einem Bereich von 0,1 bis 20 ml.

Sofern das Ansaugmittel mit mindestens zwei phasenverschoben betreibbaren Membranpumpen verbunden ist, kann ein unerwünschtes Pulsieren des Pulvers in der Druckleitung vermieden, zumindest jedoch reduziert werden. Die hohen Frequenzen der Membranpumpe begünstigen die kontinuierliche Förderung kleiner Mengen des feinkörnigen Pulvers. Für die kontinuierliche, pulsationsarme Förderung feiner Pulver ist es vorteilhaft, wenn jede Membranpumpe an ihrer Saugseite über eine möglichst kurze Saugleitung mit dem Ansaugmittel verbunden ist. Als vorteilhaft hat sich eine Länge der Saugleitung von 1 bis 50 cm herausgestellt, während die Länge der Druckleitung zur pulsationsarmen Förderung vorzugsweise mindestens um den Faktor 10 länger ist. In Versuchen mit Saug-und Druckleitungen mit einem Innendurchmesser von 2,5 mm konnte keine pulsationsarme Förderung bei Druckleitungslängen von 3 m erzielt werden, während gute Ergebnisse bei Druckleitungslängen von mehr als 10 m erzielt wurden. Die Länge der Saugleitung betrug in den Versuchen 0,5 bis 1 m. Aufgrund der Versuche wurde erkannt, dass eine gleichmäßige, pulsationsarme Förderung des feinen Pulvers erreicht wird, wenn jede Membranpumpe an der Druckseite mit einer Druckleitung verbunden ist und die Länge der Druckleitung deren Durchmesser mindestens um den Faktor 2000 übersteigt.

Zur Vermeidung von Pulveranhaftungen in dem Förderweg sind die Ansaugmittel und/oder die Ansaugleitungen und/oder die Druckleitungen der Vorrichtung vorzugsweise mit einem Schwingungserreger verbunden. Sofern das Ansaugmittel mit einem Schwingungserreger verbunden ist, wird das Pulver in der Nähe der Oberfläche oder in der Deckschicht im Bereich der Ansaugöffnung aufgelockert und Pulveragglomerate werden vor dem Ansaugen und in dem Ansaugmittel selbst zerstört.

Durch eine überlagerte Schwingbewegung, wie z.B. in Form einer kreisförmigen Oszillation des Ansaugmittels, werden mehrere positive Effekte in Bezug auf die angesaugte und geförderte Pulvermenge erreicht. Die Pulveroberfläche wird geglättet und so kann eine konstante bzw. vorgegebene Fördermenge an Pulver eingehalten werden. Die von dem Ansaugmittel pro Zeiteinheit überstrichende Fläche wird erhöht und so eine mögliche Unstetigkeit in der Beschaffenheit der Pulveroberfläche ausgemittelt. Beide Effekte sorgen für eine stetige Einhaltung einer bestimmten Förderrate (eine vorgegebenen Massenstroms).

Als Schwingungserreger kommen beispielsweise mechanische Vibratoren oder PiezoSchwinger zum Einsatz.

Die Förderung feinkörniger Pulver kann dadurch verbessert werden, dass das angesaugte Pulver in dem Ansaugmittel und/oder dem Ansaugmittel nachgeordneten Leitungen unter Zuführung eines Gases fluidisiert wird. Das Fluidisierungsgas wird insbesondere mit einem geringen Volumenstrom von 1 l/min bis 50 l/min beigemischt.

Zum Zwecke der Fluidisierung kann das Ansaugmittel als Hohlnadel ausgeführt sein. Eine innere Hohlnadel dient als Ansaugmittel, während über eine die innere Nadel umgebende äußere Hohlnadel das Fluidisierungsgas zugeführt wird.

Damit ein vorgegebener Massenstrom des Pulvers vom Behälter zu dem Substrat gewährleistet werden kann, steht der Behälter auf einer Waage. Die Waage ist mit einer Mess- und Regelelektronik verbunden, die das Bewegungsmittel bzw. das Mehr-Achssystem derart steuert, dass über die Geschwindigkeit der Relativbewegung der vorgegebene Massenstrom des Pulvers von der Oberfläche des Pulvers zu der Oberfläche des Substrats eingestellt bzw. aufrechterhalten wird.

Die horizontale Relativbewegung in der Deckschicht kann mit Hilfe der Bewegungsmittel kreisförmig ausgeführt werden. Zur Vergleichmäßigung des Niveaus der Pulveroberfläche kann auch eine Vorrichtung zur Nivellierung der Pulveroberfläche vorgesehen sein, beispielsweise eine sich relativ zur Pulveroberfläche bewegende Harke, die das Pulver aus den angrenzenden Bereichen in die durch das Ansaugmittel nach dem Ansaugen des Pulvers hervorgerufene Spur in der Deckschicht drückt. In Folge dessen ist nach einer kreisförmigen Relativbewegung um 360° nur eine geringe Nachführung des Ansaugmittels in Richtung der Z-Achse erforderlich.

Wird die horizontale Relativbewegung in der Deckschicht mit Hilfe der Bewegungsmittel spiralförmig ausgeführt, ermöglicht diese Relativbewegung das vollständige Abtragen einer Pulverschicht über die gesamte Oberfläche des Pulvervorrates ohne mechanische Einwirkung auf die an die durch das Ansaugmittel erzeugte Spur angrenzenden Bereiche.

Das Verfahren zum Fördern von Pulver umfasst die folgenden Schritte:

- Ansaugen eines Pulvers durch eine Ansaugöffnung eines Ansaugmittels von einer Oberfläche des in einem Behälter befindlichen Pulvers;
- Erzeugen einer Relativbewegung zwischen der Ansaugöffnung und der Oberfläche des Pulvers während des Ansaugens des Pulvers;
- ständiges Wiegen des Gewichts des Pulvers im Behälter während des Ansaugens des Pulvers, wobei die Messdaten an eine Mess- und Regelelektronik übergeben werden; und
- Einstellen einer Geschwindigkeit der Relativbewegung zwischen der Ansaugöffnung und der Oberfläche des Pulvers, dass ein vorgegebener Massenstrom des Pulvers aus dem Behälter erzielt wird.

Nachfolgend wird die Erfindung anhand der Figuren näher erläutert. Es zeigen:

**Figur 1** eine schematische Seitenansicht einer erfindungsgemäßen Vorrichtung zum Fördern von feinkörnigem Pulver,

**Figur 2** die Vorrichtung nach Figur 1 zum Fördern von feinkörnigem Pulver zu einer Plasma-Beschichtungsanlage,

**Figur 3a** eine Darstellung einer spiralförmigen Relativbewegung in Bezug auf die Oberfläche des Pulvervorrats,

**Figur 3b** eine Darstellung einer mäanderförmigen Relativbewegung in Bezug auf die Oberfläche des Pulvervorrats,

**Figur 3c** eine Darstellung einer geradlinigen Relativbewegung in Bezug auf die Oberfläche des Pulvervorrats,

**Figur 4a** eine schematische Seitenansicht eines weiteren Ausführungsbeispiels einer erfindungsgemäßen Vorrichtung mit einer kreisförmigen Relativbewegung in Bezug auf die Oberfläche des Pulvervorrats,

**Figur 4b** eine Draufsicht auf die Vorrichtung nach Figur 4a sowie

**Figur 5** eine schematische Darstellung einer Regelung zur Einstellung eines zeitlich vorgegebenen Massenstroms des mit dem Aussaugmittel geförderten Pulvers.

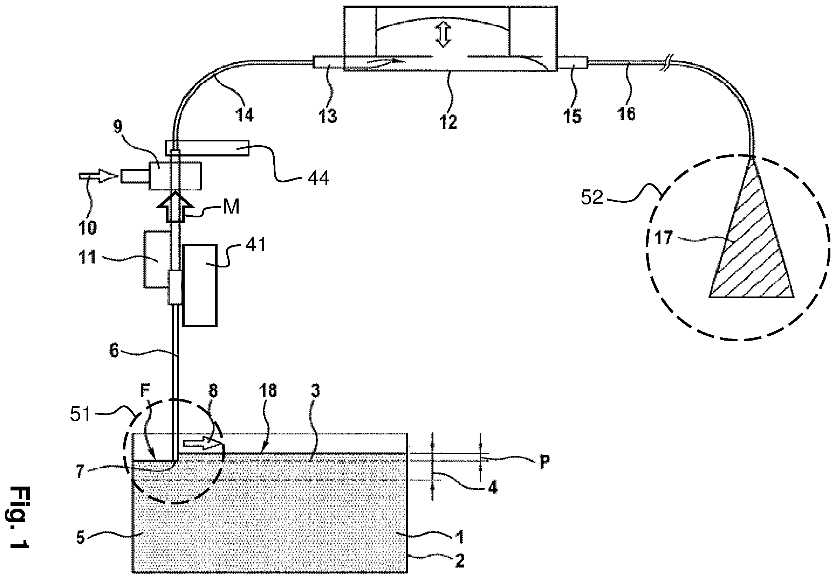

**Figur 1** zeigt eine Vorrichtung zum Fördern feinkörniger, nicht fließfähiger Pulver 1 mit Partikelgrößen von 0,01 μm bis 100 μm. Das Pulver 1 wird in einem Behälter 2 bevorratet. Der Pulvervorrat weist eine in der Figur nicht maßstäblich dargestellte Deckschicht 3 mit einer konstanten Dicke 4 von 20 mm auf. Unterhalb der Deckschicht 3 bzw. einer Oberfläche 18 des Pulvers 1 befindet sich eine untere Schicht 5 des Pulvervorrats, deren Dicke zu Beginn des Ansaugens des Pulvers 1 aus dem Pulvervorrat um ein Vielfaches größer ist als die Dicke 4 der Deckschicht 3.

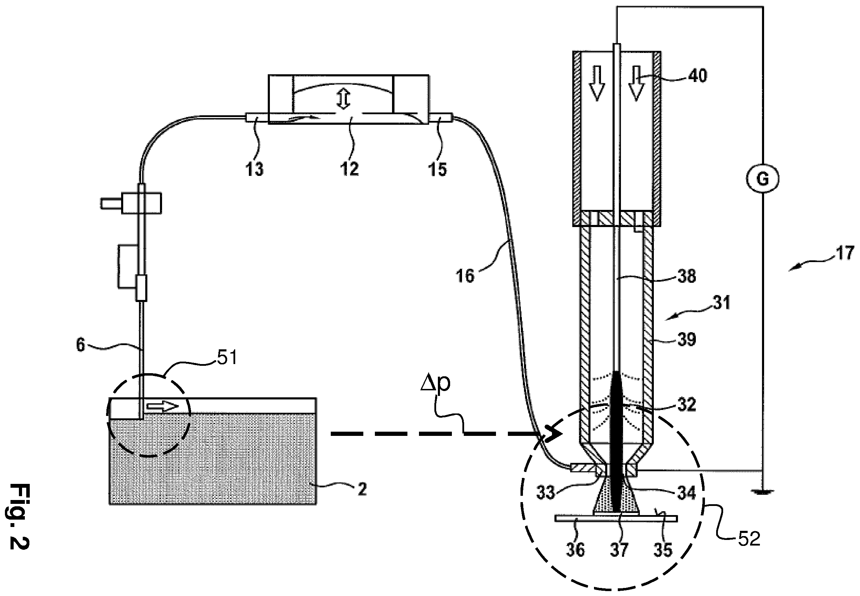

Die Vorrichtung umfasst weiterhin ein Ansaugmittel 6 mit einer Ansaugöffnung 7 zum Ansaugen des Pulvers 1 aus dem Behälter 2. Das Ansaugmittel 6 ist in dem dargestellten Ausführungsbeispiel als Hohlnadel ausgeführt. Die Hohlnadel ist an einem Mehr-Achssystem 41 als Bewegungsmittel zur Erzeugung einer Relativbewegung 8 in X-Richtung X und Y-Richtung Y zwischen der Ansaugöffnung 7 und dem Pulver 1 innerhalb der Deckschicht 3 angeordnet. Ebenso ist es denkbar, dass die Ansaugöffnung 7 des Ansaugmittel 6 zur Oberfläche 18 des Pulvers 1 in einem Abstand von 0mm oder geringfügig von der Oberfläche 18 des Pulvers 1 beabstandet geführt wird. Es kann ein Abstand von der Oberfläche 18 des Pulvers 1 vorherrschen, wenn die Partikel des Pulvers 1 leicht genug sind, um von einem ersten Arbeitsraum 51, im die sich die Oberfläche 18 des Pulvers 1 befindet zu einem zweiten Arbeitsraum 52, im dem sich eine Oberfläche 35 eines Substrats 36 (siehe Fig. 2) befindet, transportiert zu werden. Zwischen der Oberfläche 18 des Pulvers 1 und der Oberfläche 35 des Substrats 36 herrscht eine Druckdifferenz Δp vor. In diesem Fall werden die Partikel des Pulvers 1 aus der Oberfläche 18 gesaugt.

An dem der Ansaugöffnung 7 gegenüberliegenden Ende des Ansaugmittels 6 befindet sich eine Gaszuführung 9 zum Zuführen von Fluidisierungsgas 10 in den Massenstrom $\frac{dM}{dt}$ des Pulvers 1. Ferner ist an dem Ansaugmittel 6 ein mechanischer Schwingungserreger 11 angeordnet, der Agglomerationen des Pulvers 1 in dem

Durchgang des Ansaugmittels 6 auflöst und das Pulver 1 in der Oberfläche 18 bzw. in der Deckschicht 3 im Bereich der Ansaugöffnung 7 auflockert.

Eine Möglichkeit zur Einstellung der Druckdifferenz Δp zwischen der Oberfläche 18 des Pulvers 1 und der Oberfläche 35 des Substrats 36 bzw. zwischen dem ersten Arbeitsraum 51 und dem zweiten Arbeitsraum 52 ist eine Membranpumpe 12. In diesem Fall ist die Membranpumpe 12 an einer Saugseite 13 über eine Saugleitung 14 mit dem Ansaugmittel 6 verbunden. An der Druckseite 15 der Membranpumpe 12 ist eine Druckleitung 16 angeschlossen, die zu einer in Figur 1 nicht näher dargestellten Plasma-Beschichtungsvorrichtung 17 führt, deren Funktions- und Arbeitsweise weiter unten anhand von Figur 2 näher erläutert wird.

Mit Hilfe des in **Figur 1** nicht dargestellten Mehr-Achssystems 41 wird eine Relativbewegung zwischen der Ansaugöffnung 7 und dem Pulvervorrat innerhalb der Deckschicht 3 bzw. in Bezug auf die Oberfläche während des Ansaugens des Pulvers 1 mit Hilfe der Membranpumpe 12 erzeugt. Die Eintauchtiefe der Ansaugöffnung 7 liegt während der gesamten horizontalen Bewegung durch die Deckschicht 3 in einem Bereich zwischen 1 bis 10 mm.

Die in **Figur 1** dargestellte Vorrichtung kann mehrere Ansaugmittel 6 aufweisen, die von einem oder mehreren Mehr-Achssystemen 41 gleichzeitig relativ zu dem Pulvervorrat innerhalb der Deckschicht 3 bzw. in Bezug auf die Oberfläche bewegt werden. Das Mehr-Achssystem 41 zur Erzeugung der Relativbewegung 8 kann beispielsweise als Portalsystem oder als Roboterarm eines Roboters ausgeführt sein.

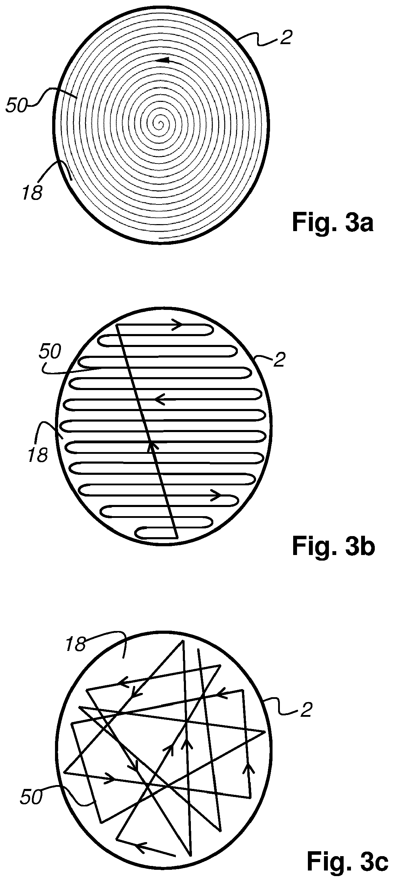

Das Mehr-Achssystem 41 kann die beispielhaft in den Figuren 3a bis 3c dargestellten Relativbewegungen 8 zwischen dem Ansaugmittel 6 und der Oberfläche 18 des Pulvers 1 durchführen. Um eine Pulverschicht P (siehe Fig. 1) über die gesamte Oberfläche 18 des Pulvers 1 abzusaugen, wird eine horizontale Relativbewegung 8 aus geradlinigen Komponenten in x-Richtung X und y-Richtung Y zusammensetzt. Wie dies aus den Draufsichten aus Figur 3a bis Figur 3c erkennbar ist. Nachdem die Pulverschicht P abgetragen wurde, bildet die durch den Pulverabtrag freigelegte Fläche F die neue Oberfläche 18 des Pulvervorrates. Die Ansaugöffnung 7 wird mit Hilfe des Mehr-Achssystems 41 in z-Richtung nachgeführt, um die Ansaugöffnung 7 in der nach oben durch die neue Oberfläche 18 begrenzten neuen Deckschicht 3 zu positionieren (vgl. Figur 1). Anschließend wird aus der neuen Deckschicht 3 mit dem Ansaugmittel 6 das feinkörnige Pulver 1 oberflächennah abgesaugt. Die Beabstandungsmöglichkeiten bzw. die Eintauchtiefe des Ansaugmittels 6 in das Pulver 1 ist oben ausführlich beschrieben. Obwohl die Figuren 1 und 2 ein Eintauchen des Ansaugmittels 6 in das Pulver 1 wiedergeben, soll dies nicht als Beschränkung der Erfindung aufgefasst werden.

**Figur 3a** zeigt eine horizontale spiralförmige Relativbewegung 8 innerhalb der Deckschicht 3 bzw. in Bezug auf die Oberfläche 18 des Pulvers 1, die mittels einer geeigneten Steuerung ebenfalls mit dem Mehr- Achssystem 41 erzeugt werden kann. **Figur 3b** zeigt eine horizontale mäanderförmige Relativbewegung 8 innerhalb Deckschicht 3 bzw. in Bezug auf die Oberfläche 18 des Pulvers 1. Figur 3c zeigt eine horizontale geradlinige Relativbewegung 8 innerhalb Deckschicht 3 bzw. in Bezug auf die Oberfläche 18 des Pulvers 1, die sich aus mehreren geradlinigen Bahnkurven 50 zusammensetzt. Die Nachführung erfolgt mit allen möglichen Bahnkurven 50, in z-Richtung Z.

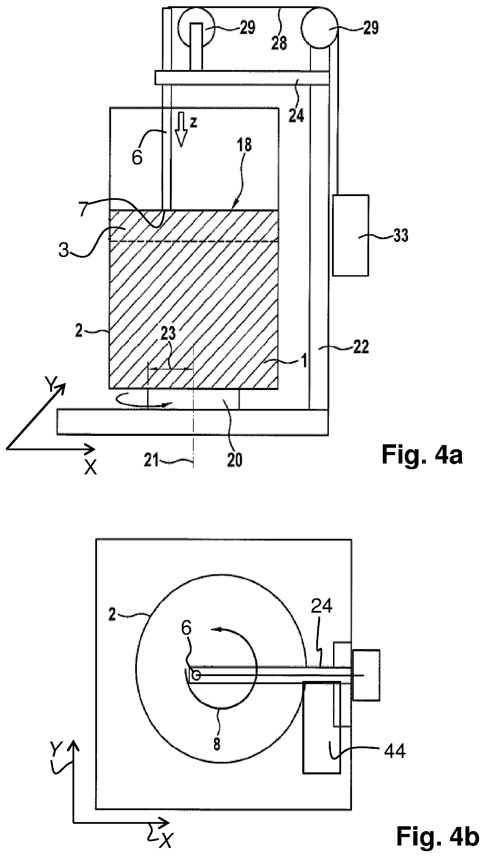

**Figuren 4 a und 4b** zeigen eine weitere Ausführungsform einer erfindungsgemäßen Vorrichtung, die eine kreisförmige Relativbewegung 8 (setzt sich aus Komponenten in der x-Richtung X und der y-Richtung Y zusammen) zwischen dem Ansaugmittel 6 und der Oberfläche 18 des Pulvers 1 im Behälter 2 erzeugt. Mit dem Ausführungsbeispiel nach Figur 1 übereinstimmende Bestandteile der Vorrichtung nach Figur 4 werden mit übereinstimmenden Bezugszeichen versehen. Insoweit wird auch auf die dortigen Ausführungen verwiesen.

Die Vorrichtung umfasst in der hier dargestellten Ausführungsform einen Drehantrieb 20, mit dem sich der im Querschnitt kreiszylindrische Behälter 2 um seine Rotationsachse 21 in Drehung versetzen lässt. In der Regel wird jedoch auch den Drehantrieb 20 verzichtet.

An einem horizontalen Tragarm 24 des Gestells 22 ist das in z-Richtung Z höhenverstellbare Ansaugmittel 6 angeordnet. Die in Richtung der Oberfläche 18 des Pulvers 1 weisende Ansaugöffnung 7 kann in die Deckschicht 3 hineinragen oder, wie in Figur 4a dargestellt, lediglich die Oberfläche 18 des Pulvers 1 berührt. Selbstverständlich ist es jedoch auch im Rahmen einer Ausführungsform nach Figur 4 möglich, das Ansaugmittel 6 selbst mit einem Antrieb zum Nachführen des Ansaugmittels 6 in z-Richtung Z zu versehen.

**Figur 2** veranschaulicht ein Anwendungsbeispiel der erfindungsgemäßen Vorrichtung. Die Druckseite 15 der Membranpumpe 12 ist über die Druckleitung 16 mit einem Strahlgenerator 31 zur Erzeugung eines gebündelten Plasmastrahls 32 durch Lichtbogenentladung verbunden. In den Plasmastrahl 32 des Strahlgenerators 31 wird das Pulver-/ Gasgemisch im Bereich von dessen Auslass 34 in einem Einspeisebereich mit Hilfe einer Düse 33 eingebracht. Das fein verteilte Pulver 1 wird mit dem Plasmastrahl 32 auf der Oberfläche 35 eines Substrates 36 als Beschichtung 37 abgeschieden. Der Strahlgenerator 31 weist zur Erzeugung des Plasmastrahls 32 eine innere, stabförmige Elektrode 38 und eine diese umgebene, gegen die innere stabförmige Elektrode 38 isolierte Mantelelektrode 39 auf, die von der der Düse 33 gegenüberliegenden Öffnung von einem Arbeitsgas 40 durchströmt wird.

Der Abstand zwischen der Ansaugöffnung 7 zur Oberfläche 18 des Pulvers 1 kann durch das in auch z-Richtung wirksame Mehr-Achssystem 41 innerhalb der Deckschicht 3 bzw. in Bezug auf die Oberfläche 18 des Pulvers 1 vorgegeben werden.

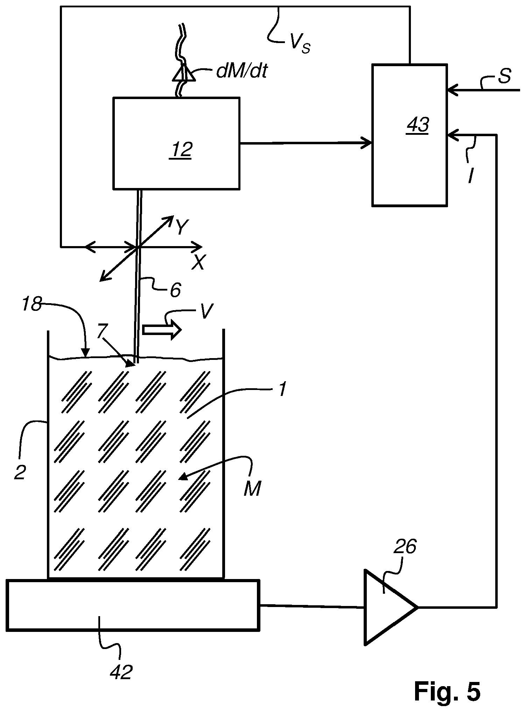

**Figur 5** zeigt eine schematische Anordnung 23, mit der ein vorgegebener Massenstrom $\frac{dM}{dt}$ des mittels dem Ansaugmittel 6 geförderten Pulvers 1 ermöglicht wird. Der Behälter 2 steht zusammen mit dem Pulver 1 auf einer Waage 42. Durch ständiges Wiegen der Masse M des Pulvers 1 im Behälter 2 während des Ansaugens des Pulvers 1, kann man die pro Zeiteinheit abgesaugte Menge des Pulvers 1 ermitteln. Die gewonnenen werden an eine Mess- und Regelelektronik 43 übergeben. Zwischen der Waage 42 und der Mess- und Regelelektronik 43 ist ein Operationsverstärker 26 vorgesehen. Die Waage 42 ist mit der Mess- und Regelelektronik 43 verbunden ist, die das Mehr- Achssystem 41 derart steuert, dass über die Geschwindigkeit V der Relativbewegung 8 der vorgegebene Massenstrom des Pulvers 1 von der Oberfläche 18 des Pulvers 1 zu der Oberfläche 35 des Substrats 36 aufrechterhalten werden kann. Die Mess- und Regelelektronik 43 empfängt den Ist-Wert I des Massenstroms $\frac{dM}{dt}$ (erste Ableitung der transportierten Masse M nach der Zeit t) in Abhängigkeit von der Zeit. Die Veränderung des Massenstroms $\frac{d^2M}{dt^2}$ ist die zweite Ableitung der transportierten Masse nach der Zeit. Die Mess- und Regelelektronik 43 führt einen Vergleich zwischen Ist-Wert I und Soll-Wert S durch. Die Membranpumpe 12 liefert ebenfalls Information über dessen Status an die Mess- und Regelelektronik 43. An Hand des Vergleichs wird eine Regelgröße Vs für die Geschwindigkeit V der Relativbewegung 8 generiert.

Die ermittelte Regelgröße Vs dient zur Steuerung und Regelung des Mittels zur Erzeugung der Relativbewegung 8 zwischen dem Ansaugmittel bzw. der Ansaugöffnung 7 und der Oberfläche 18 des Pulvers 1, wobei das Ansaugens nicht unterbrochen wird. Aufgrund der Regelgröße Vs wird die Geschwindigkeit V der Relativbewegung 8 derart verändert, dass ein zeitlich vorgegebener Massenstrom $\frac{dM}{dt}$ vorherrscht.

**Bezugszeichenliste**

| Nr. | Bezeichnung |
| --- | --- |
| 1 | Pulver |
| 2 | Behälter |
| 3 | Deckschicht |
| 4 | Dicke |
| 5 | untere Schicht |
| 6 | Ansaugmittel |
| 7 | Ansaugöffnung |

(fortgesetzt)

| Nr. | Bezeichnung |
|-----|-------------|
| 8 | Relativbewegung |
| 9 | Gaszuführung |
| 10 | Fluidisierungsgas |
| 11 | Schwingungserreger |
| 12 | Membranpumpe |
| 13 | Saugseite |
| 14 | Saugleitung |
| 15 | Druckseite |
| 16 | Druckleitung |
| 17 | Plasmabeschichtungsvorrichtung |
| 18 | Oberfläche |
| 19 | Oberfläche |
| 10 | Druckantrieb |
| 21 | Rotationsachse |
| 22 | Gestell |
| 23 | Anordnung |
| 24 | Tragarm |
| 26 | Operationsverstärker |
| 27 | Segment |
| 28 | Seil |
| 29 | Umlenkrollen |
| 30 | Gegengewicht |
| 31 | Strahlgenerator |
| 32 | Plasmastrahl |
| 33 | Düse |
| 34 | Auslass |
| 35 | Oberfläche |
| 36 | Substrat |
| 37 | Beschichtung |
| 38 | stabförmige Elektrode |
| 39 | Mantelelektrode |
| 40 | Arbeitsgas |
| 41 | Mehr-Achssystem |
| 42 | Waage |
| 43 | Mess- und Regelelektronik |
| 44 | Bewegungsmittel |
| 50 | Bahnkurve |
| 51 | erster Arbeitsraum |

(fortgesetzt)

| Nr. | Bezeichnung |
|-----|-------------|
| 52 | zweiter Arbeitsraum |
| I | Ist-Wert |
| M | Masse des Pulvers |
| $\dfrac{dM}{dt}$ | Massenstrom |
| P | Pulverschicht |
| $\Delta p$ | Druckdifferenz |
| S | Soll-Wert |
| V | Geschwindigkeit |
| Vs | Regelgröße Geschwindigkeit |
| X | x-Richtung |
| Y | y-Richtung |
| Z | z-Richtung |

**Patentansprüche**

1.  Vorrichtung zum Fördern von Pulver (1) umfassend:

    • einen Behälter (2) für das im Behälter (2) eine Oberfläche (18) definierende Pulver (1); und
    • ein Ansaugmittel (6) mit einer Ansaugöffnung (7) zum Ansaugen des Pulvers (1) von der Oberfläche (18);
    **gekennzeichnet durch**
    • eine Waage (42) zum ständigen Wiegen einer Masse (M) des Pulvers (1) im Behälter (2) während des Ansaugens des Pulvers (1), wobei der Behälter (2) mit dem Pulver (1) auf der Waage (42) steht;
    • ein Bewegungsmittel (44) zur Erzeugung einer Relativbewegung (8) in einer X-Koordinatenrichtung (X) und einer Y-Koordinatenrichtung (Y) zwischen der Ansaugöffnung (7) und der Oberfläche (18) des Pulvers (1) im Behälter (2) während des Ansaugens des Pulvers (1) und zur vertikalen Nachführung der Ansaugöffnung (7) in einer Z-Koordinatenrichtung (Z), wobei eine Geschwindigkeit (V) der Relativbewegung (8) aufgrund einer Mess- und Regelelektronik (43) derart veränderlich ist, dass ein vorgegebener Massenstrom $\left(\dfrac{dM}{dt}\right)$ des Pulvers (1) bei der Förderung des Pulvers (1) vorherrscht;
    • wobei die Waage (42) mit der Mess- und Regelelektronik (43) zum Steuern des Bewegungsmittels (44) derart verbunden ist, dass der vorgegebene Massenstrom $\left(\frac{dM}{dt}\right)$ des Pulvers (1) von der Oberfläche (18) des Pulvers (1) zu einer Oberfläche (35) eines Substrats (36) über die Geschwindigkeit (V) der Relativbewegung (8) eingestellt bzw. aufrecht erhalten wird.

2. Vorrichtung nach Anspruch 1, wobei das Ansaugmittel (6) in seiner Position in der Z-Koordinatenrichtung (Z) von der Oberfläche (18) des Pulvers (1) im Behälter (2) beabstandet ist.

3. Vorrichtung nach Anspruch 1, wobei das Ansaugmittel (6) in seiner Position in der Z-Koordinatenrichtung (Z) die Oberfläche (18) des Pulvers (1) im Behälter (2) berührt.

4. Vorrichtung nach Anspruch 3, wobei das Ansaugmittel (6) in seiner Position in der Z-Koordinatenrichtung (Z) in eine Deckschicht (3) des Pulvers (1) im Behälter (2) eintaucht.

5. Vorrichtung nach einem der voranstehenden Ansprüche, wobei das Bewegungsmittel (44) ein Mehr-Achssystem (41) zur Erzeugung der Relativbewegung (8) zwischen der Ansaugöffnung (7) und der Oberfläche (18) des Pulvers (1) aufweist.

6. Vorrichtung nach einem der voranstehenden Ansprüche, wobei das Ansaugmittel (6) einen hohlzylindrischen Körper mit zwei Stirnseiten aufweist, wobei eine der Stirnseiten die Ansaugöffnung (7) bildet.

7. Vorrichtung nach einem der voranstehenden Ansprüche, wobei eine Druckdifferenz (Δp) zwischen der Oberfläche (18) des Pulvers (1) in einem ersten Arbeitsraum (51) und der Oberfläche (35) des Substrats (36) in einem zweiten Arbeitsraum (52) vorherrscht, wobei das Pulver (1) zu dem Arbeitsraum (52) förderbar ist.

8. Vorrichtung nach Anspruch 7, wobei die Druckdifferenz (Δp) mit mindestens einer Membranpumpe (12) erzeugbar ist.

9. Vorrichtung nach einem der voranstehenden Ansprüche, wobei das Ansaugmittel (6) und/oder die Ansaugleitung (7) und/oder die Druckleitung (16) mit einem Schwingungserreger (11) verbunden sind.

10. Vorrichtung nach einem der voranstehenden Ansprüche, wobei das Ansaugmittel (6) eine Zuführung für ein Fluidisierungsgas (10) aufweist.

11. Verfahren zum Fördern von Pulver (1) umfassend die Schritte:

• Ansaugen eines Pulvers (1) durch eine Ansaugöffnung (7) eines Ansaugmittels (6) von einer Oberfläche (18) des in einem auf einer Waage (42) stehenden Behälter (2) befindlichen Pulvers (1);
• Erzeugen einer Relativbewegung (8) zwischen der Ansaugöffnung (7) und der Oberfläche (18) des Pulvers (1) im Behälter (2) in einer X-Koordinatenrichtung (X) und einer Y-Koordinatenrichtung (Y) während des Ansaugens des Pulvers (1);
• ständiges Wiegen des Gewichts des Pulvers (1) im Behälter (2) während des Ansaugens des Pulvers (1) mittels der Waage (42), wobei die Messdaten an eine Mess- und Regelelektronik (43) übergeben werden; und
• Einstellen einer Geschwindigkeit (V) der Relativbewegung (8) in der X-Koordinatenrichtung (X) und der Y-Koordinatenrichtung (Y) zwischen der Ansaugöffnung (7) und der Oberfläche (18) des Pulvers (1), so dass eine zeitliche Änderung der Masse ($M_T$) des Pulvers (1) im Behälter (2) bei der Förderung des Pulvers (1) konstant ist.

12. Verfahren nach Anspruch 11, wobei eine Druckdifferenz (Δp) zwischen der Oberfläche (18) des Pulvers (1) in einem ersten Arbeitsraum (51) und einer Oberfläche (35) eines Substrats (36) in einem zweiten Arbeitsraum (52) vorherrscht, mittels der das Pulver (1) zum Substrat (36) gefördert wird.

13. Verfahren nach Anspruch 12, wobei, die Druckdifferenz (Δp) mit mindestens einer Membranpumpe (12) erzeugt wird.

14. Verfahren nach einem der Ansprüche 11 bis 13, wobei das angesaugte Pulver (1) in dem Ansaugmittel (6) und / oder dem Ansaugmittel (6) nachgeordneten Leitungen unter Zuführung eines Gases fluidisiert wird.

**Claims**

1. Device for conveying powder (1), comprising:

• a container (2) for the powder (1) defining a surface (18) in the container (2); and
• a suction means (6) having a suction opening (7) for sucking in the powder (1) from the surface (18);
**characterized by**
• a balance (42) for continuously weighing a mass (M) of the powder (1) in the container (2) during suction of the powder (1), wherein the container (2) with the powder (1) stands on the balance (42);
• a moving means (44) for generating a relative movement (8) in an X-coordinate direction (X) and a Y-coordinate direction (Y) between the suction opening (7) and the surface (18) of the powder (1) in the container (2) during the suction of the powder (1) and for vertically tracking the suction opening (7) in a Z-coordinate direction (Z), wherein a speed (V) of the relative movement (8) is variable on the basis of a measurement and control electronics (43) in such a way that a predetermined mass flow $\left(\frac{dM}{dt}\right)$ of the powder (1) prevails when the powder (1) is conveyed;
• wherein the balance (42) is connected to the measurement and control electronics (43) for controlling the moving means (44) in such a way that the predetermined mass flow $\left(\frac{dM}{dt}\right)$ of the powder (1) from the surface (18) of the powder (1) to a surface (35) of a substrate (36) is set or maintained via the speed (V) of the relative movement (8).

2. Device according to claim 1, wherein the suction means (6) is spaced in its position in the Z-coordinate direction (Z) from the surface (18) of the powder (1) in the container (2).

3. Device according to claim 1, wherein the suction means (6) in its position in the Z-coordinate direction (Z) contacts the surface (18) of the powder (1) in the container (2).

4. Device according to claim 3, wherein the suction means (6) in its position in the Z-coordinate direction (Z) dips into a covering layer (3) of the powder (1) in the container (2).

5. Device according to one of the preceding claims, wherein the moving means (44) comprises a multi-axis system (41) for generating the relative movement (8) between the suction opening (7) and the surface (18) of the powder (1).

6. Device according to one of the preceding claims, wherein the suction means (6) comprises a hollow cylindrical body with two end faces, wherein one of the end faces forms the suction opening (7).

7. Device according to one of the preceding claims, wherein a pressure difference (Dp) between the surface (18) of the powder (1) in a first working space (51) and the surface (35) of the substrate (36) in a second working space (52) prevails, wherein the powder (1) can be conveyed to the working space (52).

8. Device according to claim 7, wherein the pressure difference (Dp) can be generated with at least one diaphragm pump (12).

9. Device according to one of the preceding claims, wherein the suction means (6) and/or the suction line (7) and/or the pressure line (16) are connected to a vibration generator (11).

10. Device according to one of the preceding claims, wherein the suction means (6) has a supply for a fluidizing gas (10).

11. Method for conveying powder (1), comprising the steps of:

• sucking a powder (1) through a suction opening (7) of a suction means (6) from a surface (18) of the powder (1) contained in a container (2) standing on a balance (42);
• generating a relative movement (8) between the suction opening (7) and the surface (18) of the powder (1) in the container (2) in an X-coordinate direction (X) and a Y-coordinate direction (Y) during the suction of the powder (1);
• continuously weighing the weight of the powder (1) in the container (2) during the suction of the powder (1) by means of the balance (42), wherein the measurement data are transmitted to a measurement and control electronics (43); and
• setting a speed (V) of the relative movement (8) in the X-coordinate direction (X) and the Y-coordinate direction (Y) between the suction opening (7) and the surface (18) of the powder (1), so that a temporal change of the mass ($M_T$) of the powder (1) in the container (2) is constant when the powder (1) is conveyed.

12. Method according to claim 11, wherein a pressure difference (Dp) between the surface (18) of the powder (1) in a first working space (51) and a surface (35) of a substrate (36) in a second working space (52) prevails, by means of which the powder (1) is conveyed to the substrate (36).

13. Method according to claim 12, wherein the pressure difference (Dp) is generated with at least one diaphragm pump (12).

14. Method according to one of claims 11 to 13, wherein the powder (1) sucked in is fluidized in the suction means (6) and/or the lines downstream of the suction means (6) with the supply of a gas.

**Revendications**

1. Dispositif de transport de poudre (1) comprenant :

• un récipient (2) pour la poudre (1) qui définit une surface (18) dans le récipient (2) ; et

• un moyen d'aspiration (6) qui présente une ouverture d'aspiration (7) pour aspirer la poudre (1) depuis la surface (18) ;

**caractérisé par**

• une balance (42) pour peser en continu une masse (M) de la poudre (1) dans le récipient (2) pendant l'aspiration de la poudre (1), le récipient (2) contenant la poudre (1) étant posé sur la balance (42) ;

• un moyen de déplacement (44) pour produire un mouvement relatif (8) dans une direction de coordonnées X (X) et une direction de coordonnées Y (Y) entre l'ouverture d'aspiration (7) et la surface (18) de la poudre (1) dans le récipient (2) pendant l'aspiration de la poudre (1) et pour faire suivre verticalement l'ouverture d'aspiration (7) dans une direction de coordonnées Z (Z), une vitesse (V) du mouvement relatif (8) étant variable au moyen d'une électronique de mesure et de régulation (43) de telle sorte qu'un flux massique prédéfini $\left(\frac{dM}{dt}\right)$ de la poudre (1) prévaut lors du transport de la poudre (1) ;

• dans lequel la balance (42) est reliée à l'électronique de mesure et de régulation (43) pour commander le moyen de déplacement (44) de telle sorte que le flux massique prédéterminé $\left(\frac{dM}{dt}\right)$ de la poudre (1) de la surface (18) de la poudre (1) vers une surface (35) d'un substrat (36) soit réglé ou maintenu par l'intermédiaire de la vitesse (V) du mouvement relatif (8).

2. Dispositif selon la revendication 1, dans lequel le moyen d'aspiration (6), dans sa position dans la direction de coordonnées Z (Z), est espacé de la surface (18) de la poudre (1) dans le récipient (2).

3. Dispositif selon la revendication 1, dans lequel le moyen d'aspiration (6), dans sa position dans la direction de coordonnées Z (Z), touche la surface (18) de la poudre (1) dans le récipient (2).

4. Dispositif selon la revendication 3, dans lequel le moyen d'aspiration (6), dans sa position dans la direction de coordonnées Z (Z), s'enfonce dans une couche supérieure (3) de la poudre (1) dans le récipient (2).

5. Dispositif selon l'une des revendications précédentes, dans lequel le moyen de déplacement (44) présente un système à plusieurs axes (41) pour produire le mouvement relatif (8) entre l'ouverture d'aspiration (7) et la surface (18) de la poudre (1).

6. Dispositif selon l'une des revendications précédentes, dans lequel le moyen d'aspiration (6) présente un corps cylindrique creux avec deux faces frontales, l'une des faces frontales formant l'ouverture d'aspiration (7).

7. Dispositif selon l'une des revendications précédentes, dans lequel une différence de pression (Δp) prévaut entre la surface (18) de la poudre (1) dans une première chambre de travail (51) et la surface (35) du substrat (36) dans une deuxième chambre de travail (52), la poudre (1) pouvant être transportée vers la chambre de travail (52).

8. Dispositif selon la revendication 7, dans lequel la différence de pression (Δp) peut être produite avec au moins une pompe à membrane (12).

9. Dispositif selon l'une des revendications précédentes, dans lequel le moyen d'aspiration (6) et/ou la conduite d'aspiration (7) et/ou la conduite de pression (16) sont reliés à un générateur de vibrations (11).

10. Dispositif selon l'une des revendications précédentes, dans lequel le moyen d'aspiration (6) présente une amenée pour un gaz de fluidisation (10).

11. Procédé de transport de poudre (1), comprenant les étapes suivantes :

• aspiration d'une poudre (1) à travers une ouverture d'aspiration (7) d'un moyen d'aspiration (6) depuis une surface (18) de la poudre (1) se trouvant dans un récipient (2) posé sur une balance (42) ;

• production d'un mouvement relatif (8) entre l'ouverture d'aspiration (7) et la surface (18) de la poudre (1) dans le récipient (2) dans une direction de coordonnées X (X) et une direction de coordonnées Y (Y) pendant l'aspiration de la poudre (1) ;

• pesage en continu du poids de la poudre (1) dans le récipient (2) pendant l'aspiration de la poudre (1) au moyen de la balance (42), les données de mesure étant transmises à une électronique de mesure et de régulation (43) ; et

• réglage d'une vitesse (V) du mouvement relatif (8) dans la direction de coordonnées X (X) et la direction de coordonnées Y (Y) entre l'ouverture d'aspiration (7) et la surface (18) de la poudre (1), de telle sorte qu'une variation dans le temps de la masse ($M_T$) de la poudre (1) dans le récipient (2) pendant le transport de la poudre (1) soit constante.

12. Procédé selon la revendication 11, dans lequel une différence de pression (Δp) prévaut entre la surface (18) de la poudre (1) dans une première chambre de travail (51) et une surface (35) d'un substrat (36) dans une deuxième chambre de travail (52), au moyen de laquelle la poudre (1) est transportée vers le substrat (36).

13. Procédé selon la revendication 12, dans lequel la différence de pression ($\Delta$p) est produite avec au moins une pompe à membrane (12).

14. Procédé selon l'une des revendications 11 à 13, dans lequel la poudre aspirée (1) est fluidisée dans le moyen d'aspiration (6) et/ou des conduites en aval du moyen d'aspiration (6) par amenée d'un gaz.

Fig. 1

**Fig. 2**

**Fig. 3a**

**Fig. 3b**

**Fig. 3c**

Fig. 4a

Fig. 4b

**Fig. 5**

**IN DER BESCHREIBUNG AUFGEFÜHRTE DOKUMENTE**

**In der Beschreibung aufgeführte Patentdokumente**

- DE 4423197
- DE 102006002582 A1
- DE 4112268 C1
- JP 2001013043 A